# EUROPÄISCHE PATENTSCHRIFT

(11) **EP 0 968 112 B1**
(45) Veröffentlichungstag und Bekanntmachung des Hinweises auf die Patenterteilung: **24.10.2001**
(21) Anmeldenummer: 98913604.9
(22) Anmeldetag: 27.02.1998
(51) Int. Cl.: B62D 7/02

(54) **RADAUFHÄNGUNG FÜR FAHRZEUGE, INSBESONDERE NUTZFAHRZEUGE**
WHEEL SUSPENSION FOR MOTOR VEHICLES, ESPECIALLY UTILITY VEHICLES
SUSPENSION DESTINEE A DES VEHICULES AUTOMOBILES, NOTAMMENT DES VEHICULES UTILITAIRES

(30) Priorität: 19.03.1997 DE 19711381
(43) Veröffentlichungstag der Anmeldung: 05.01.2000
(73) Patentinhaber: DaimlerChrysler AG, 70567 Stuttgart (DE)
(72) Erfinder: AMMON, Dieter, D-71686 Remseck-Aldingen (DE); BÖTTIGER, Friedrich, D-73733 Esslingen (DE); CHEMNITZ, Hans-Dieter, D-12207 Berlin (DE); HÖLZEL, Günter, D-73269 Hochdorf (DE); RAMACHER, Klaus, D-52223 Stollberg-Breinig (DE); ROSENKRANZ, Volker, D-69126 Heidelberg (DE); SCHÖN, Harald, D-73240 Wendlingen (DE); STUTE, Manfred, D-73730 Esslingen (DE); WOJATSCHEK, Jürgen, D-73733 Esslingen (DE)
(86) Internationale Anmeldenummer: EP9801115
(87) Internationale Veröffentlichungsnummer: WO9841437

(56) Entgegenhaltungen:
- DE-C- 4 028 738
- US-A- 4 895 216
- US-A- 5 379 842
- PATENT ABSTRACTS OF JAPAN vol. 009, no. 297 (M-432), 25.November 1985 & JP 60 135323 A (TOSHIBA KK), 18.Juli 1985,

## Beschreibung

Die Erfindung betrifft eine Radaufhängung für Fahrzeuge, insbesondere Nutzfahrzeuge gemäß dem Oberbegriff des Anspruches 1.

Radaufhängungen der vorgenannten Art sind aus der US 5, 379, 842 bekannt und es wird bei diesen Radaufhängungen am Bodenteil des Fahrzeuges ein Montagekopf befestigt, über den, um eine aufrechte Achse drehbar, eine Konsole getragen ist, die ihrerseits über Räder gegenüber dem Boden abgestützt ist. Die Konsole ist in sich höhenverstellbar ausgebildet, um beim Einsatz im unebenen Gelände und bei Verwendung mehrerer solcher Radaufhängungen als Trageinheiten, zum Beispiel für schwere Lasten, eine gleichmäßige Lastverteilung zu erreichen. Der Montagekopf trägt einen Zahnkranz, und die Konsole ihrerseits ist an ihrem gegenüber dem Montagekopf gelagerten und nicht höhenverstellbaren Oberteil umfangsseitig mit einem Stellmotor verbunden, der eine aufrechte Drehachse aufweist und über sein am oberen Ende vorgesehenes Antriebsritzel in den Zahnkranz eingreift.

Die zentrale Lagerung der Konsole gegenüber dem Montagekopf ist aufgrund der auf die Radaufhängung einwirkenden Kräfte erheblichen Belastungen ausgesetzt und sowohl montage- wie auch verschleißbedingt kaum spielfrei zu halten. Ein entsprechendes Spiel in der Lagerung in Verbindung mit sonstigen Toleranzen, zum Beispiel in der Zentrierung des Zahnkranzes zur Lagerachse, in den Verzahnungen sowie auch in der Befestigung des Stellmotors gegenüber der Konsole bedeutet für die Paarung Ritzel-Zahnkranz im Betrieb, daß diese kaum spielfrei zu gestalten ist, womit eine spielfreie Lenkung nur schwer zu erreichen und aufrechtzuerhalten ist.

Ferner ist eine Schwenkradanordnung für ein Förderfahrzeug aus der JP -A- 60 135323 bekannt, bei der ein bodenseitig gegenüber dem Fahrzeug fester, die Schwenkachse des Fahrzeuges bestimmender und zu dieser achsgleicher Führungsring vorgesehen ist, dem drehfest koaxial ein innenverzahnter Zahnring und axial zu diesem in Richtung auf das Rad versetzt drehbar ein Tragring zugeordnet ist, der das Rad mit zu dessen aufrechter Schwenkachse senkrechter Drehachse sowie zugehörigem Radnabenmotor und einen aufrechten Stellmotor trägt. Dieser steht mit seinem Antriebsritzel mit dem Zahnkranz in Eingriff, so daß über den Stellmotor die Schwenklage des Rades einstellbar ist. Eine Konstruktion dieser Art ermöglicht einen verhältnismäßig großen Durchmesser für die Lagerung des Tragringes gegenüber dem Führungsring und damit vergleichsweise geringe spezifische Belastungen. Unvermeidbare Toleranzen, belastungsbedingte Nachgiebigkeiten und Verschleiß machen aber auch bei einer solchen Ausgestaltung einen dauerhaft spielfreien Zahneingriff kaum möglich, so daß eine spielfreie Lenkung nur schwer zu erreichen und aufrechtzuerhalten ist.

Durch die Erfindung soll eine Radaufhängung der eingangs genannten Art dahingehend weitergebildet werden, daß ohne Komplizierung des Aufbaus eine weitgehend spielfreie Antriebsverbindung zwischen Stellmotor und Zahnkranz als Voraussetzung für eine möglichst spielfreie Lenkung erreicht wird.

Erreicht wird dies durch die Merkmale des Anspruches 1. Die Erfindung geht dabei von dem Ansatz aus, den Zahnkranz, mit dem das Ritzel des Stellmotors in Eingriff zu halten ist, als Festabstützung für den Stellmotor zu nutzen, also zwischen Zahnkranz und Ritzel eine Abstützung herzustellen, die ungeachtet der ansonsten gegebenen Bauteiltoleranzen sowie verschließ- und belastungsbedingt auftretender Spiele eine weitgehend spielfreie Verbindung zwischen Ritzel und Zahnkranz ermöglicht, in Verbindung mit einer gegenüber der Konsole elastischen Abstützung des Stellmotores.

Im Hinblick auf eine möglichst kompakte Bauweise erweist es sich dabei als zweckmäßig, wenn der Stützring innenverzahnt ist und die Gegenabstützung des Stellmotors gegen den Außenumfang des Stützringes erfolgt.

Der bauliche Aufwand läßt sich dabei verhältnismäßig gering halten, und zwar bei kleinem Bauvolumen, wenn der Stellmotor stehend an der Konsole angeordnet ist, in seinem oberen Endbereich das Antriebsritzel trägt und mit der Konsole über winklig zueinander stehende Streben verbunden ist, die mit der Konsole als Basis in der Draufsicht ein Stützdreieck bilden. Eine solche Lösung macht es möglich, Zahnkranz und Ritzel quasi spielfrei in Eingriff zu halten, auch wenn der Stellmotor mit der Konsole verbunden ist und die Konsole ihrerseits spiel- und/oder belastungsbedingt gewisse Abweichungen von ihrer zum Stützring konzentrischen Lage erfährt.

Die Erfindung wird im folgenden anhand eines in den Zeichnungen dargestellten Ausführungsbeispieles näher erläutert. Es zeigen jeweils stark schematisiert dargestellt:
- Figur 1: eine Seitenansicht einer Ausgestaltungsform einer Radaufhängung gemäß der Erfindung,
- Figur 2: eine Frontansicht der Radaufhängung gemäß Figur 1,
- Figur 3: eine Draufsicht auf die Radaufhängung gemäß Figuren 1 und 2, im wesentlichen ohne Montagekopf,
- Figur 4: eine der Figur 3 entsprechende Darstellung bei um 45° gegenüber der Geradeausfahrstellung gemäß Figur 3 eingeschlagenem Rad,
- Figur 5: in vergrößerter Darstellung den Montagekopf, ausschnittsweise dargestellt, und
- Figur 6: in einer der Figur 5 entsprechenden Darstellung einen vergrößerten Ausschnitt der Verbindung des Antriebes mit dem Montagekopf.

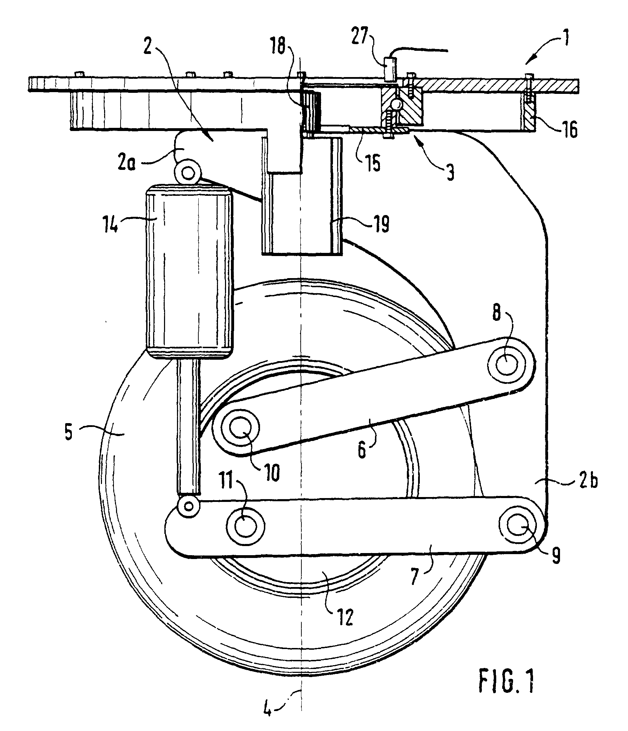

Für die erläuternde Beschreibung der Erfindung anhand der Figuren wird zunächst davon ausgegangen, daß die erfindungsgemäße Radaufhängung als Montageeinheit aus den aus Figur 1 ersichtlichen Teilen besteht.

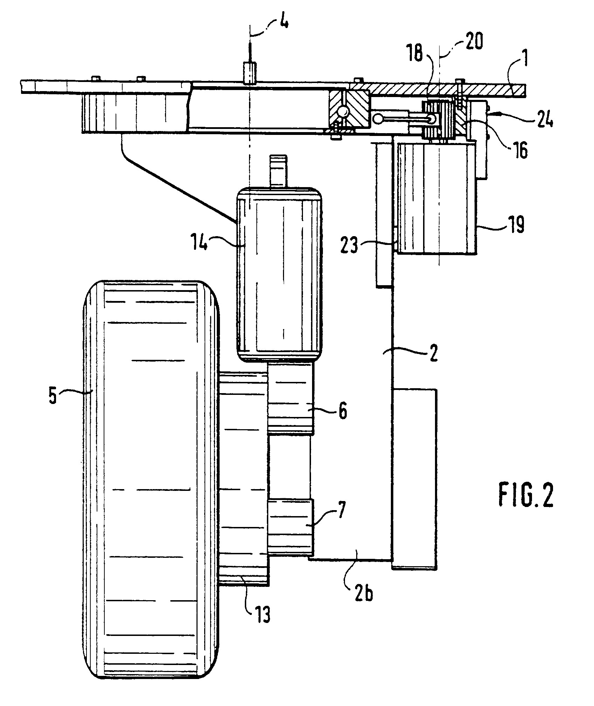

Hierbei umfaßt die Darstellung gemäß Figur 1 einen plattenförmigen Montagekopf 1, dem in hier nicht weiter dargestellter Weise am nicht weiter dargestellten Fahrzeugaufbau ein entsprechender Befestigungsflansch zugeordnet sein kann, gegen den der plattenförmige Montagekopf in nicht weiter dargestellter Weise verschraubt oder in sonstiger Weise befestigt werden kann. An dem Montagekopf 1 sind die weiteren Teile der Radaufhängung angebracht, so insbesondere die Konsole 2, die über das Lager 3 mit dem Montagekopf 1 verbunden ist. Das Lager 3 ist in Figur 1 geschnitten dargestellt. Über das Lager 3 mit seiner Mittelachse 4, die aufrecht, bevorzugt vertikal zur Bodenebene steht, ist die Konsole 2 gegenüber dem Montagekopf 1 drehbar, und zwar bevorzugt bezogen auf die Geradeausfahrstellung des Rades 5 nach beiden Seiten über zumindest 110°, was sowohl ein Querfahren wie auch die Realisierung sonstiger, für die Praxis gegebenenfalls notwendiger Lenkprogramme ermöglicht. Prinzipiell ist aber durch die erfindungsgemäße Lösung bei entsprechender Ausgestaltung, die hier nicht weiter dargestellt ist, auch eine Verdrehung des Rades bezogen auf die Achse 4 um 360° realisierbar. Die Konsole 2, die L-förmig gestaltet ist und über ihren horizontalen Schenkel 2a mit dem Lager 3 verbunden ist, weist des weiteren einen in Höhenrichtung verlaufenden und vom Schenkel 2a nach unten ragenden Schenkel 2b auf, an dem die Radführungsglieder befestigt sind, die durch zwei Lenker 6 und 7 gebildet sind. Von den Lenkern 6 und 7, die über Lager 8 bzw. 9 am Schenkel 2b angelenkt sind und die sich im Wesentlichen parallel zur Längsmittelebene des Rades 5, aber seitlich zu dieser erstrecken, bildet der Lenker 6 einen oberen Lenker, der sich vom Lager 8 bei verhältnismäßig flacher Neigung nach unten erstreckt, während der Lenker 7 als unterer Lenker nahezu horizontale Erstreckung aufweist. Von ihren Lagern 8 und 9, damit vom Schenkel 2b aus gesehen verlaufen die Lenker 6 und 7 in Richtung des Schenkels 2a. Radseitig sind die Lenker 6 und 7 über Lager 10 und 11 mit dem Träger 12 des teilweise vom Rad 5 umschlossenen, im Einzelnen nicht dargestellten Radnabenmotores 13 verbunden Auf dem radseitigen, freien Ende des Lenkers 7 ist, vom Lager 9 aus gesehen jenseits des Lagers 11 liegend, das Radfeder- und/oder Dämpferbein 14 abgestützt, das schematisiert angedeutet ist und dessen obere Anlenkung dem vom Schenkel 2b abgelegenen Ende des Schenkels 2a zugeordnet ist. Bezogen auf die Konsole 2 liegen, wie Figur 2 zeigt, die Lenker 6 und 7 bevorzugt zwischen dem Rad 5 und der Konsole 2, es ist also eine zum Schenkel 2b der Konsole 2 seitlich versetzte Lage des Rades 5 gegeben, wobei der Versatz des Rades 5 zum Schenkel 2b etwa der doppelten Größe des seitlichen Versatzes der Lagerachse 4 zu den Schenkeln 2a und 2b entspricht. Der Schenkel 2a ist mit einer seitlichen Auskragung versehen, und zwar in Richtung des seitlichen Versatzes des Rades 5, auf der das Lager 3 abgestützt ist. Die Abstützung erfolgt dabei im Ausführungsbeispiel über eine Lagerplatte 15, die mit dem Innenring 3a des Lagers 3 verbunden ist, das einen Außenring 3b aufweist, der seinerseits an dem plattenförmigen Montagekopf 1 angeschraubt ist.

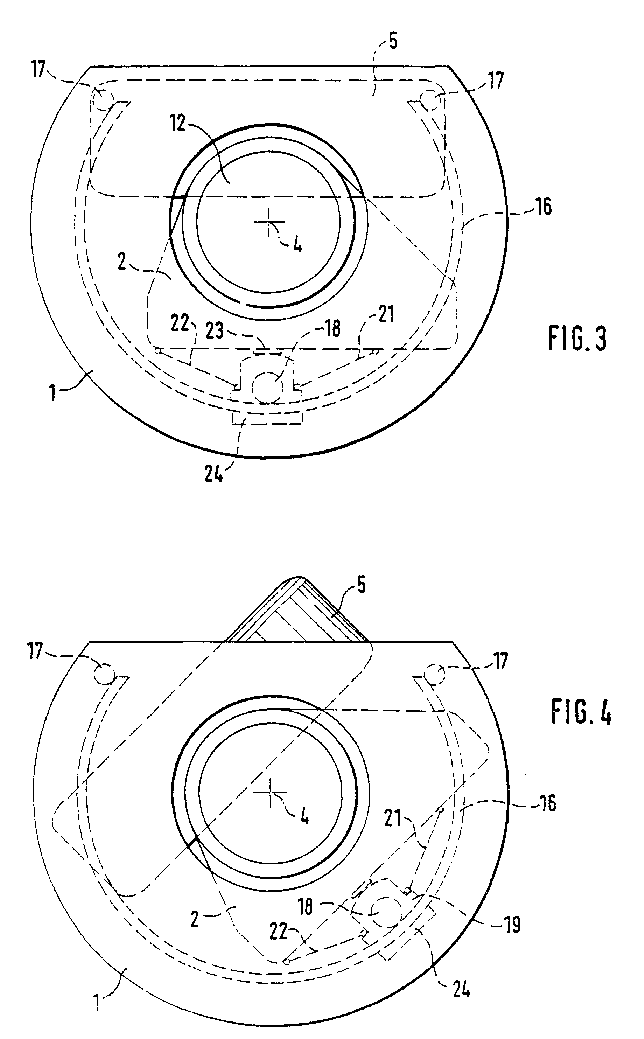

Der plattenförmige Montagekopf 1 trägt desweiteren, konzentrisch zum Lager 3 und, bezogen auf die Achse 4 einen größeren Radius aufweisend, einen Stützring 16, der, wie Figur 3 zeigt, bezogen auf die hier vorgesehene, nicht volle Durchdrehbarkeit des Rades nicht geschlossen ausgeführt ist und mit seinen offenen Enden im Bereich der Außenkante des Rades 5, bezogen auf dessen Geradeausfahrstellung, endet, wobei den Enden Anschläge 17 zugeordnet sind, die den Schwenkweg der Konsole begrenzen.

Der Stützring 16 als Festabstützung ist im Ausführungsbeispiel als innenverzahnter Ring ausgebildet und er wirkt mit einem Ritzel 18 eines ein Stellmittel bildenden Antriebsmotores 19 zusammen, der bei aufrechter Drehachse 20 an der Konsole nahe dem Schenkel 2a angebracht ist. Die Anbringung erfolgt dabei im Ausführungsbeispiel, wie insbesondere Figuren 3 und 4 zeigen, über Stützstreben 21, 22, die sich in Längsrichtung des Schenkels 2a erstrecken und die bevorzugt sowohl mit dem Motor 19 wie auch mit der Konsole 2 elastisch gelenkig verbunden sind. In der Draufsicht gemäß Figur 3 bilden sie dabei - grob betrachtet - die Schenkel eines gleichschenkeligen Dreiecks, dessen Scheitel, von der Achse 4 gesehen jenseits des Schenkels 2a und seitlich versetzt zu diesem liegt und dessen Basis durch den Schenkel 2a gebildet ist. Desweiteren ist zur Abstützung des Motores 19 im Bereich von dessen unterem, vom Ritzel 18 abgelegenen Endes eine elastische Abstützung 23 desselben gegenüber der Konsole 2 gegeben. Durch diese Art der Anlenkung des Motores 19 wird erreicht, daß das Ritzel 18 ungeachtet von Toleranzen und Verschleiß mit dem Stützring 16 in Eingriff gehalten werden kann. Hierzu trägt weiter bei, daß der Stützring 16 von einer zum Motor 19 festen Außenabstützung 24 übergriffen wird, und zwar im Wesentlichen gegenüberliegend zum Ritzel 18, wobei diese Außenabstützung zweckmäßigerweise mit einer den Stützring 16 beaufschlagenden Gleitplatte 25 versehen ist, die ihrerseits über eine Feder 26 oder dergleichen gegenüber dem motorfesten Teil der Außenabstützung 24 abgestützt ist.

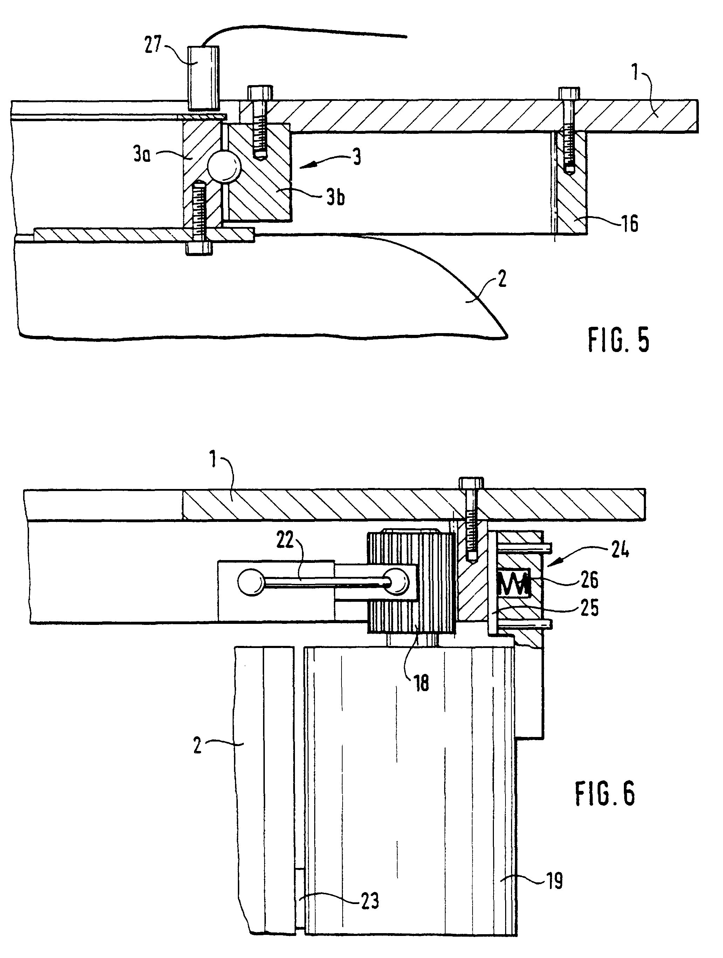

Wie Figur 5 zeigt erweist es sich als zweckmäßig, den Innenring des Lagers 3 als Sensormessring zu verwenden, und hierzu stirnseitig, auf seiner vom Rad 5 abgewandten Seite mit Messmarken zu versehen. Gegebenenfalls kann auch eine entsprechende Markierungsauflage vorgesehen werden. Dieser als Messring dienenden Stirnseite des Innenringes sind einer oder mehrere Sensoren 27 gegenüberliegend angeordnet, so daß über die Sensoren aufgrund der zum Rad 5 drehfesten Lage des Innenringes 15 die jeweilige Ist-Lenkstellung des Rades erfaßt werden kann. Dem oder den Sensoren 27 können zweckmäßigerweise an dem plattenförmigen Montagekopf entsprechende Halterungen zugeordnet sein, so daß bei entsprechender Ausrichtung des Montagekopfes gegenüber dem Fahrzeugaufbau keine weiteren Justierarbeiten bei Montage und Demontage notwendig sind.

In der vorstehenden Schilderung ist davon ausgegangen, daß zum Montagekopf 1 die Befestigungsplatte gehört und diese Befestigungsplatte zusammen mit den übrigen, daran befestigten Teilen insgesamt als Montageeinheit herausgenommen wird. Eine demgegenüber reduzierte Lösung besteht darin, die Befestigungsplatte am Fahrzeug zu belassen und für die Demontage jeweils lediglich das Lager 3 zu lösen, da mit dem Lager 3 auch die Konsole und die daran befestigten Teile, so insbesondere der Antrieb mit dem Motor 19 als Montageeinheit lösbar sind.

Bei beiden vorstehend angesprochenen Ausgestaltungsmöglichkeiten, also der Ausgestaltungsmöglichkeit, der Montageeinheit mit Befestigungsplatte oder der Montageeinheit ohne Befestigungsplatte, also einer lediglich durch die Konsole und die daran angeschlossenen Teile gebildeten Montageeinheit ist die Montageeinheit innerhalb des vom Lager 3 umgriffenen Bereiches mit einer zentralen, durch den Innenraum des Lagers 3 gebildeten Ausnehmung versehen, durch die alle Anschlüsse zum Rad geführt werden können, so auch alle elektrischen und/oder hydraulischen Anschlüsse, was hier nicht weiter dargestellt ist.

Wenn im Rahmen der vorstehenden Erläuterung der Erfindung der Antrieb für die Konsole, und damit für die Verdrehung des Rades 5 um die Achse 4 als Lenkachse als Zahnradantrieb dargestellt und erläutert wurde, so geschah dies selbstverständlich nur beispielsweise und es ist in gleicher Weise möglich, diesen Antrieb in gebräuchlicherweise als Kettentrieb, Zahnstangenantrieb oder dergleichen schlupffrei auszugestalten.

Im Hinblick auf die Ausfallsicherheit, die bezüglich der Lenkung von Fahrzeugen in höchstem Maße gewährleistet sein muß, kann es im Rahmen der Erfindung zweckmäßig sein, eine Doppelung der Antriebselemente derart vorzunehmen, daß ein zusätzlicher, unabhängiger zweiter Motor mit Ritzel vorgesehen wird, der in die Verzahnung des zur Drehachse 4 konzentrischen Stützringes 16 eingreift. Eine entsprechende Sicherheitsvorkehrung kann darin bestehen, bei nur einem Antriebsmotor diesem eine zweite Wicklung zuzuordnen.

Dadurch, daß im Rahmen der Erfindung der Drehantrieb für den Radsatz als Montageeinheit quasi der Radaufhängung zugeordnet wird, ergibt sich innerhalb des Aufbaus ein Gewinn an Bauraum und Bauhöhe. Ferner ermöglicht die Anordnung des Stützringes 16 in der geschilderten Weise sehr große Stützringdurchmesser, und damit bei üblicher Ritzelgröße sehr große Übersetzungsverhältnisse, mit der Folge, daß der zugeordnete Antriebsmotor für den Drehantrieb des Radsatzes relativ schwach ausgelegt werden kann und deswegen auch mit herkömmlichen Übersetzungsgetrieben betrieben werden kann.

## Patentansprüche

1. Radaufhängung für Fahrzeuge, insbesondere Nutzfahrzeuge mit einem am Bodenteil des Fahrzeuges befestigbaren Montagekopf (1), einer Konsole (2) als Träger eines lenkbaren Rades (5), die am Montagekopf (1) um eine aufrechte Achse (4) drehbar gelagert ist, sowie einem zur Verdrehung der Konsole (2) gegenüber dem Montagekopf (1) dienenden Stellmotor (19), der von der Konsole (2) getragen ist und der über ein Antriebsritzel (18) mit einem zur Drehachse (4) der Konsole (2) konzentrischen, gegenüber dem Montagekopf (1) feststehenden Zahnkranz (16) in Eingriff steht,
**dadurch gekennzeichnet,**
**daß** der Zahnkranz als Stützring (16) eine Festabstützung für den Stellmotor (19) bildet, daß am Stützring (16) auf der Gegenseite zum Ritzel (18) eine Gegenabstützung (24) des Stellmotores (19) anliegt, und daß der Stellmotor (19) mit der Konsole (2) elastisch gelenkig verbunden ist.

2. Radaufhängung nach Anspruch 1,
**dadurch gekennzeichnet,**
**daß** der Stützring (16) innenverzahnt ist und gegen den Außenumfang des Stützringes (16) die Gegenabstützung (24) des Stellmotores (19) anliegt.

3. Radaufhängung nach Anspruch 1 oder 2,
**dadurch gekennzeichnet,**
**daß** die Gegenabstützung (24) elastisch nachgiebig mit dem Stellmotor verbunden ist.

4. Radaufhängung nach einem der vorhergehenden Ansprüche,
**dadurch gekennzeichnet,**
**daß** der Stützring (16) am Montagekopf (1) angebracht ist.

5. Radaufhängung nach einem der vorhergehenden Ansprüche,
**dadurch gekennzeichnet,**
**daß** der Stellmotor (19) stehend an der Konsole (2) angeordnet ist, im oberen Endbereich das Antriebsritzel (18) trägt und mit der Konsole (2) über winklig zueinander stehende, mit der Konsole (2) als Basis in der Draufsicht ein Stützdreieck bildende Streben (21, 22) verbunden ist.

6. Radaufhängung nach Anspruch 5,
**dadurch gekennzeichnet,**
**daß** die Streben (21, 22) elastisch mit dem Stellmotor (19) und/oder der Konsole (2) verbunden sind.

7. Radaufhängung nach einem der Ansprüche 5 oder 6,
**dadurch gekennzeichnet,**
**daß** der Stellmotor (19) im vom Ritzel (18) abgelegenen, unteren Bereich eine elastische Abstützung (23) zur Konsole (2) aufweist.

## Claims

1. A wheel suspension system for vehicles, in particular utility vehicles, with a mounting head (1) which can be fixed to the underbody of the vehicle, a bracket (2) bearing a steered wheel (5) which is fitted to the mounting head (1) in such a manner that it can rotate about an upright axis (4) and a servomotor (19) which serves to rotate the bracket (2) in relation to the mounting head (1), is borne by the bracket (2) and engages with a ring gear (16) which is concentric with the axis of rotation (4) of the bracket (2) and fixed in relation to the mounting head (1) via a drive sprocket (18),
**characterised in that**
the ring gear in the form of a supporting ring (16) forms a fixed support for the servomotor (19), that a counter support (24) for the servomotor (19) lies adjacent to the supporting ring (16) on the opposite side to the sprocket (18) and that the servomotor (19) is hinged elastically to the bracket (2).

2. A wheel suspension system in accordance with claim 1,
**characterised in that**
the supporting ring (16) has internal toothing and the counter support (24) for the servomotor (19) lies adjacent to the external periphery of the supporting ring (16).

3. A wheel suspension system in accordance with claims 1 or 2,
**characterised in that**
the counter support (24) is connected with the servomotor (19) in an elastic, non-positive manner.

4. A wheel suspension system in accordance with one of the preceding claims,
**characterised in that**
the supporting ring (16) is fitted to the mounting head (1).

5. A wheel suspension system in accordance with one of the preceding claims,
**characterised in that**
the servomotor (19) is positioned standing on the bracket (2), bears the drive sprocket (18) at the tope end and is connected to the bracket via struts (21, 22) which stand at an angle to each other and, when seen in top view, form the base of a supporting triangle with the bracket.

6. A wheel suspension system in accordance with claim 5,
**characterised in that**
the struts (21, 22) are connected elastically to the servomotor (19) and/or the bracket (2).

7. A wheel suspension system in accordance with one of claims 5 or 6,
**characterised in that**
the lower area of the servomotor (19) remote from the sprocket (18) has an elastic support (23) to the bracket (2).

## Revendications

1. Suspension de roue pour véhicules, en particulier véhicules utilitaires avec une tête de montage (1), susceptible d'être fixée sur la partie fond du véhicule, une console (2), faisant office de support d'une roue (5) à mobilité directionnelle, montée à rotation sur la tête de montage (1), autour d'un axe (4) vertical, ainsi qu'un servomoteur (19) servant à assurer la rotation de la console (2) par rapport à la tête de montage (1), servomoteur porté par la console (2) et venant en prise par l'intermédiaire d'un pignon d'entraînement (18) avec une couronne dentée (16) fixe par rapport à la tête de montage (1), concentrique par rapport à l'axe de rotation (4) de la console (2),
**caractérisée en ce que**,
la couronne dentée forme, à titre d'anneau d'appui (16), un appui fixe pour le servomoteur (19), **en ce que** sur l'anneau d'appui (16) appuie, sur le côté opposé du pignon (18), un contre-appui (24) du servomoteur (19) et **en ce que** le servomoteur (19) est relié de façon articulée élastiquement à la console (2).

2. Suspension de roue selon la revendication 1,
**caractérisée en ce que**
l'anneau d'appui (16) est à denture intérieure et le contre-appui (24) du servomoteur (19) appuie contre la périphérie extérieure de l'anneau d'appui (16).

3. Suspension de roue selon la revendication 1 ou 2,
**caractérisée en ce que**
le contre-appui (24) est relié de façon élastiquement déformable au servomoteur.

4. Suspension de roue selon l'une des revendications précédentes,
**caractérisée en ce que**
l'anneau d'appui (16) est monté sur la tête de montage (1).

5. Suspension de roue selon l'une des revendications précédentes,
**caractérisée en ce que**
le servomoteur (19) est disposé verticalement sur la console (2), en portant dans la zone d'extrémité supérieure le pignon d'entraînement (18), et est relié à la console (2) par l'intermédiaire d'entretoises (21, 22), placées sous un angle les unes par rapport aux autres, entretoises formant avec la console (2), à titre de base, en observant en vue de dessus, un triangle d'appui.

6. Suspension de roue selon la revendication 5,
**caractérisée en ce que**
les entretoises (21, 22) sont reliées élastiquement au servomoteur (19) et/ou à la console (2).

7. Suspension de roue selon la revendication 5 ou 6,
**caractérisée en ce que**
le servomoteur (19) présente, dans la zone inférieure dégagée du piston (18), un appui élastique (23) pour la console (2).
